# EUROPÄISCHE PATENTSCHRIFT

(11) **EP 2 846 891 B1**
(45) Veröffentlichungstag und Bekanntmachung des Hinweises auf die Patenterteilung: **01.06.2016**
(21) Anmeldenummer: 13719128.4
(22) Anmeldetag: 30.04.2013
(51) Int. Cl.: B01D 19/04, C08G 77/50, C08L 83/14

(54) **ENTSCHÄUMERFORMULIERUNGEN ENTHALTEND ORGANOPOLYSILOXANE**
DEFOAMER FORMULATIONS COMPRISING ORGANOPOLYSILOXANES
FORMULATIONS ANTI-MOUSSE CONTENANT DES ORGANOPOLYSILOXANES

(30) Priorität: 07.05.2012 DE 102012207484
(43) Veröffentlichungstag der Anmeldung: 18.03.2015
(73) Patentinhaber: Wacker Chemie AG, 81737 München (DE)
(72) Erfinder: BREHM, Christof, 84489 Burghausen (DE); BURGER, Willibald, 84489 Burghausen (DE); HÖLZLWIMMER, Elisabeth, 84359 Simbach (DE); JOACHIMBAUER, Martina, 84533 Haiming (DE)
(74) Vertreter: Deffner-Lehner, Maria
(86) Internationale Anmeldenummer: PCT/EP2013/059030
(87) Internationale Veröffentlichungsnummer: WO 2013/167430

(56) Entgegenhaltungen:
- EP-A2- 0 301 531
- US-A- 4 741 861

## Beschreibung

Die Erfindung betrifft die Entschäumerformulierungen enthaltend Organopolysiloxane und deren Verwendung in wässrigen Tensidsystemen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaums kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach US 3,383,327 A durch Erhitzen von hydrophiler Kieselsäure in Polydimethylsiloxanen hergestellt. Durch Anwendung von basischen Katalysatoren, kann die Wirksamkeit derartiger Entschäumer verbessert werden (US 3,560,401 A). Eine Alternative ist die Verteilung von hydrophobierter Kieselsäure in einem Polydimethylsiloxan, z.B. entsprechend DE 29 25 722 A. Jedoch ist die Wirksamkeit der erhaltenen Entschäumer noch verbesserungswürdig. So beschreibt US 4,145,308 A beispielsweise eine Entschäumerzubereitung, die neben einem Polydiorganosiloxan und Kieselsäure noch ein Copolymeres aus (CH₃)₃SiO_{1/2}- und SiO₂-Bausteinen enthält. Copolymere aus (CH₃)₃SiO_{1/2}- und SiO₂-Bausteinen sollen auch in Kombination mit Siloxanen die Langalkylgruppen tragen vorteilhaft sein (US 4,919,843 A).

Die Verwendung von anvernetzten zum Teil bereits gummiähnlichen Polydimethylsiloxanen zur Steigerung der Entschäumerwirkung ist seit langem bekannt (US 2,632,736 A). Die Herstellung derartiger Produkte, kann z.B. durch radikalische Vernetzung von Polydimethylsiloxan erfolgen (z.B. DE 3805661 A1, EP 273 448 A2). Allerdings sind diese Verfahren sehr unspezifisch und liefern schlecht handhabbare Produkte.

EP 163 541 A2 lehrt die Herstellung einer Entschäumerzubereitung mit verbesserter Langzeitwirkung durch katalytische Umsetzung von trimethylsiloxyterminierten Polydimethylsiloxanen, hydroxylterminierten Polydimethylsiloxanen, einem Alkoxysilan bzw. Siloxan oder einem Copolymeren aus (CH₃)₃SiO_{1/2}-und SiO₂-Bausteinen sowie einem Füllstoff in Gegenwart eines Katalysators. Als Katalysatoren werden Basen oder metallorganische Verbindungen erwähnt.

Die Herstellung eines Entschäumers durch Vermischen von hydrophober Kieselsäure mit einem Polysiloxan, das durch alkalisch katalysierte Reaktion bei Temperaturen von über 120°C aus trimethylsilylterminierten Polydimethylsiloxanen, hydroxylterminierten Polydimethylsiloxanen und einem Copolymeren aus (CH₃)₃SiO_{1/2}- und SiO₂-Bausteinen hergestellt wurde, beschreibt EP 217 501 A2. Dadurch soll die Wirksamkeit des Entschäumers bei hohen Konzentrationen an anionischen Tensiden verbessert werden.

Durch Zugabe von anvernetzten Siloxanen (EP 434 060 A2) ist eine weitere Wirkungssteigerung möglich. Derartige anvernetzte und verzweigte Strukturen sind auch durch Umsetzung von endständig vinylhaltigen Siloxanen mit Si-H funktionellen Siloxanen möglich (EP 516 109 A1, DE 44 44 175 A1, DE 42 23 644 A1).

EP 434 060 A2, EP 516 109 A1 und DE 42 23 644 A1 beschreiben verzweigte Polysiloxane als Bestandteile von Entschäumern, die in einer Hydrosilylierungreaktion von endständig vinylhaltigen Siloxanen mit Si-H funktionellen Siloxanen erhalten werden, wodurch die verzweigten Polysiloxane Struktureinheiten der Formel O_{2/2}MeSi-CH₂CH₂-SiMe₂O_{1/2} aufweisen.

Anvernetzte und verzweigte Strukturen, die in Entschäumerformulierungen verwendet werden, sind ferner zugänglich durch Umsetzung von Verbindungen, die mindestens drei aliphatischen Doppelbindungen aufweisen, mit Si-H-funktionalisierten Organopolysiloxanen (DE 10 200 40 52 421 A1, DE 10 200 50 36 748 A1).

In US 7,105,581 B1 sind Antischaummittel auf Basis von Siloxanen beschrieben, die als Zusatz ein verzweigtes Polyether-Polysiloxan-Copolymer enthalten. Bei dem zugesetzte Copolymer handelt es sich um ein Tensid.

Die nach dem Stand der Technik hergestellten Entschäumerformulierungen weisen jedoch in stark schäumenden tensidreichen Systemen nicht immer eine ausreichende Wirksamkeit auf oder sind aufgrund der hohen Viskosität bzw. des erreichten Vernetzungsgrades schwer handhabbar.

Es bestand die Aufgabe, Entschäumer auf der Basis von Siloxanen bereitzustellen, welche insbesondere in tensidreichen stark schäumenden Medien eine verbesserte Wirksamkeit zeigen aber dennoch leicht handhabbar sind.

Gegenstand der Erfindung sind Entschäumerformulierungen enthaltend
(1) Organopolysiloxane enthaltend pro Molekül mindestens eine Struktureinheit der allgemeinen Formel

   O_{2/2}RSi-Y-SiRO_{2/2} (I)

   und mindestens 2 Einheiten der allgemeinen Formel

   R¹RbSiO_{(3-b)/2} (II)

   und Einheiten der allgemeinen Formel

   R_{c}SiO_{(4-c)/2} (III),

   wobei
   b 0, 1 oder 2, vorzugsweise 1 oder 2, bevorzugt 2 ist,
   c 1 oder 2, vorzugsweise 2 ist,
   R gleich oder verschieden sein kann und einen einwertigen SiC-gebundenen organischen Rest mit 1 bis 30 C-Atomen, der ein oder mehrere voneinander getrennte O-Atome enthalten kann und der frei von aliphatischen Kohlenstoff-Kohlenstoff-Mehrfachbindungen ist, bedeutet und
   R¹ gleich R oder ein Alkenylrest mit 2 bis 4 C-Atomen, vorzugsweise ein Methyl- oder ein Vinylrest ist,
   Y einen zweiwertigen organischen Rest mit 1 bis 30 C-Atomen bedeutet,
(2) Füllstoffe,
(3) Organopolysiloxanharze aus Einheiten der allgemeinen Formel

   R²ₑ(R³O)_{f}SiO_{(4-e-f)/2} (IV),

   worin
   - R²: gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
   - R³: gleich oder verschieden sein kann und ein Wasserstoffatom oder einen einwertigen, gegebenenfalls substituierten Kohlenwasserstoffrest mit 1 bis 4 C-Atomen bedeutet,
   - e: 0, 1, 2 oder 3 ist und
   - f: 0, 1, 2 oder 3 ist,
   mit der Maßgabe, dass die Summe e+f kleiner oder gleich 3 ist und in weniger als 50 aller Einheiten der Formel (IV) im Organopolysiloxanharz die Summe e+f gleich 2 ist, gegebenenfalls
(4) Polyorganosiloxane der allgemeinen Formel

   R⁴R₂SiO(SiR₂O)ₙSiR₂R⁴ (Va)

   oder 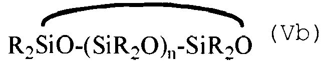 wobei
   - R: gleich oder verschieden sein kann und die oben dafür angegebene Bedeutung hat,
   - R⁴: gleich oder verschieden sein kann und R oder OR sein kann, wobei
   - R⁵: ein Wasserstoffatom oder einen einwertigen, gegebenenfalls substituierten Kohlenwasserstoffrest mit 1 bis 25 C-Atomen bedeutet,
   - m: eine ganze Zahl ist, vorzugsweise m so gewählt ist, dass die Polyorganosiloxane der Formel (Va) bei 25°C und 101,425 kPa eine Viskosität von 10 bis 1 000 000 mPas haben,
   - n: eine ganze Zahl ist, vorzugsweise n so gewählt ist, dass die Polyorganosiloxane der Formel (Vb) bei 25°C und 101,425 kPa eine Viskosität von 2 bis 15 mPas haben,
   mit der Maßgabe, dass die Polyorganosiloxane auch geringe Anteile an Verzweigungen, vorzugsweise T-Einheiten (R⁴SiO_{3/2}) und Q-Einheiten (SiO₂), enthalten können gegebenenfalls
(5) eine wasserunlösliche organische Verbindung und gegebenenfalls
(6) polyethermodifizierte Polysiloxane, welche linear oder verzweigt sein können und mindestens eine Polyethergruppe enthalten
   und gegebenenfalls
(7) ein alkalischer oder saurer Katalysator oder dessen Umsetzungsprodukt mit den Komponenten (1) bis (6).

Vorzugsweise enthalten die Entschäumerformulierungen,
(1) 100 Gew.-Teile erfindungsgemäße Organopolysiloxane (1)
(2) mindestens 0,1 Gew.-Teile, bevorzugt mindestens 1 Gew.-Teil, besonders bevorzugt mindestens 2 Gew.-Teile, und höchstens 100 Gew.-Teile, bevorzugt höchstens 70 Gew.-Teile, besonders bevorzugt höchstens 40 Gew.-Teile, Füllstoffe,
(3) mindestens 0,1 Gew.-Teile, bevorzugt mindestens 1 Gew.-Teil, besonders bevorzugt mindestens 2 Gew.-Teile, und höchstens 50 Gew.-Teile, bevorzugt höchstens 20 Gew.-Teile, besonders bevorzugt höchstens 15 Gew.-Teile, Organopolysiloxanharze aus Einheiten der Formel (IV),
(4) mindestens 0 Gew.-Teile, bevorzugt mindestens 1 Gew.-Teil, besonders bevorzugt mindestens 2 Gew.-Teile, und höchstens 900 Gew.-Teile, bevorzugt höchstens 500 Gew.-Teile, besonders bevorzugt höchstens 25 Gew.-Teile, Polyorganosiloxane der allgemeinen Formel (Va) oder (Vb),
(5) mindestens 0 Gew.-Teile, bevorzugt mindestens 1 Gew.-Teil, besonders bevorzugt mindestens 2 Gew.-Teile, und höchstens 900 Gew.-Teile, insbesondere höchstens 500 Gew.-Teile, bevorzugt höchstens 25 Gew.-Teile, besonders bevorzugt höchstens 15 Gew.-Teile, wasserunlösliche organische Verbindung,
(6) mindestens 0 Gew.-Teile, bevorzugt mindestens 1 Gew.-Teil, besonders bevorzugt mindestens 2 Gew.-Teile, und höchstens 200 Gew.-Teile, insbesondere höchstens 100 Gew.-Teile, bevorzugt höchstens 50 Gew.-Teile, besonders bevorzugt höchstens 20 Gew.-Teile, polyethermodifizierte Polysiloxane, welche linear oder verzweigt sein können und mindestens eine Polyethergruppe tragen, und
(7) mindestens 0 Gew.-Teile, bevorzugt mindestens 0,05 Gew.-Teile, besonders bevorzugt mindestens 0,1 Gew.-Teile, und höchstens 5 Gew.-Teile, bevorzugt höchstens 2 Gew.-Teile, besonders bevorzugt höchstens 1 Gew.-Teile, eines alkalischen oder sauren Katalysators oder dessen Umsetzungsprodukts mit den Komponenten (1) bis (6).

Vorzugsweise bestehen die Entschäumerformulierungen aus den Komponenten (1) bis (3) und ggf. (4) und ggf. (5) und ggf. (6) und ggf. (7).

Vorzugsweise bestehen die erfindungsgemäßen Organopolysiloxane (1) pro Molekül mindestens aus einer Struktureinheit der Formel (I), mindestens zwei Einheiten der Formel (II) und Einheiten der Formel (III).

Vorzugsweise bedeutet R einen einwertigen, von aliphatischen Kohlenstoff-Kohlenstoff-Mehrfachbindungen freien Kohlenwasserstoffrest mit 1 bis 18 Kohlenstoffatomen.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α-und der β-Phenylethylrest.
Die Kohlenwasserstoffreste R können Ether- oder Polyethergruppen enthalten.

Bevorzugte Beispiele für R sind Methyl-, Ethyl- und Phenylreste.

Beispiele für Reste R¹ sind der Methyl-, Ethyl- und Phenyl-, Vinyl-, Allyl- und 3-Butenylrest, wobei der Methyl- und der Vinylrest bevorzugte Beispiele sind.

Vorzugsweise bedeutet R² einen Kohlenwasserstoffrest mit 1 bis 18 Kohlenstoffatomen.
Beispiele für Kohlenwasserstoffreste R gelten im vollen Umfang für Kohlenwasserstoffreste R².
Bevorzugte Beispiele für Reste R² sind der Methyl-, Ethyl- und Phenylrest.

Beispiele für Reste R³ sind das Wasserstoffatom und Alkylreste, wie der Methyl-, Ethyl-, n-Propyl-, iso-Propyl- und n-Butylrest.

Bevorzugt ist der Rest R³ ein Wasserstoffatom oder ein Methyl- oder Ethylrest.

Beispiele für Reste R⁵ sind das Wasserstoffatom und Alkylreste, wie der Methyl-, Ethyl-, n-Propyl-, iso-Propyl- und n-Butylrest sowie Isotridecyl-, n-Octyl, Stearyl-, 4-Ethyl-hexadecyl-, 2-Octyl-1-dodecyl- oder Eicosanylrest.

Bevorzugt ist der Rest R⁵ ein Wasserstoffatom oder ein C₁-C₂₅-Alkylrest, wie ein Methyl-, Ethyl- oder 2-Octyl-l-dodecylrest.

Bevorzugte Beispiele Für Reste R⁴ sind der Methyl-, Ethyl- und Phenylrest und der Hydroxy-, Methoxy-, Ethoxy- und 2-Octyl-1-dodecyloxyrest.

Derartige Polyorganosiloxane der Formel (Va) mit R⁴ gleich einem Rest OR⁵ sind beispielsweise durch alkalisch katalysierte Kondensation von silanolterminierten Polydimethylsiloxanen und aliphatischen Alkoholen, wie Isotridecylalkohol, n-Octanol, Stearylalkohol, 4-Ethyl- hexadecanol, 2-Octyl-1-dodecanol oder Eicosanol, zugänglich.

Bei den erfindungsgemäßen Organopolysiloxanen (1) ist eine bevorzugte Einheit der Formel (II) eine solche der Formel R¹R₂SiO_{1/2} und bevorzugte Einheiten der Formel (III) sind solche der Formel R₂SiO, wobei R bevorzugt ein Methylrest und R¹ bevorzugt ein Methyl- oder ein Vinylrest ist.

Ein bevorzugtes Beispiel für eine Einheit der Formel (II) ist daher die Trimethylsiloxaneinheit sowie die Vinyldimethylsiloxaneinheit. Bevorzugte Bespiele für Einheiten der Formel (III) sind Dimethylsiloxaneinheiten.

Beispiele für Y in der Struktureinheit (I) sind die Methylen- und die Methingruppe, die 1,1-Ethandiyl- und die 1,2-Ethandiylgruppe, die 1,4-Butandiyl- und die 1,3-Butandiylgruppe.

Enthält Y mindestens 2 C-Atome, kann dieser Rest auch ungesättigt sein. Beispiele hierfür sind Reste der Formel

-CH=CH- (cis oder trans), -C(=CH₂)- und -C ≡ C-.

Vorzugsweise ist Y ein zweiwertiger organischer Rest mit 1 bis 12 C-Atomen, bevorzugt ein zweiwertiger Kohlenwasserstoffrest mit 1 bis 12 C-Atomen, besonders bevorzugt mit 2 C-Atomen. Beispiele für besonders bevorzugte Reste sind solche der Formel

-CH₂CH₂-, -CH(CH₃)-,

-CH=CH-, -C(=CH₂)- und -C ≡ C-.

Die Viskosität der erfindungsgemäßen Organopolysiloxane (1) beträgt vorzugsweise mindestens 50 mPa·s, besonders bevorzugt mindestens 500 mPa·s, und höchstens 10 000 mPa·s, besonders bevorzugt höchstens 5000 mPa·s, jeweils bei 25°C und 101,425 kPa.

Organopolysiloxane (1) sind beschrieben in WO 2007/023084 A2, insbesondere Seite 4, Zeile 16 bis Seite 6, Zeile 6 (incorporated by reference) wie auch in EP 2 072 591 B1, insbesondere Seite 3, Zeile 53 bis Seite 4, Zeile 22 (incorporated by reference).

Ein bevorzugtes Verfahren zur Herstellung der erfindungsgemäßen Verbindungen (1) ist die Hydrolyse von Verbindungen der allgemeinen Formel

X₂RSi-Y-SiRX₂ (VI),

wobei X eine hydrolysierbare Gruppe bedeutet und
R und Y die oben genannte Bedeutung haben.

Bevorzugt ist X eine Halogen-, Säure- und Alkoxygruppe; besonders bevorzugt ist X eine Chlor-, Acetat-, Formiat-, Methoxy- oder Ethoxygruppe.

Besonders bevorzugt ist ein Verfahren, bei dem eine Cohydrolyse von Verbindungen der allgemeinen Formel (VI) mit Silanen der allgemeinen Formel

R SiX₄₋ (VII),

durchgeführt wird,
wobei X eine hydrolysierbare Gruppe bedeutet,
R² einen Rest R oder R bedeutet und
d 1, 2 oder 3, vorzugsweise 2 oder 3, bevorzugt 3, ist.

Bevorzugt werden als Silane (VII) solche der Formel R¹R₂SiX eingesetzt, wobei R, R und X die oben dafür angegebene Bedeutung haben.

Eine bevorzugte Ausführung des Verfahrens ist die Herstellung der Organopolysiloxane (1) in zwei Stufen: Eine Cohydrolyse der Verbindungen (VI) und (VII) zur Herstellung eines Konzentrates, gefolgt von einer Equilibrierung dieses Konzentrats mit Organopolysiloxanen, die die Struktureinheit (I) nicht enthalten. Bei der Equilibrierung können als Organopolysiloxane solche ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten eingesetzt werden. Bevorzugt werden lineare, endständige Triorganosiloxygruppen aufweisende Organopolysiloxane eingesetzt. Bevorzugte Beispiele hierfür sind Mischpolymerisate aus Vinyldimethylsiloxan- und Dimethylsiloxaneinheiten und Mischpolymerisate aus Trimethylsiloxan- und Dimethylsiloxaneinheiten, besonders bevorzugt sind Mischpolymerisate aus Trimethylsiloxan- und Dimethylsiloxaneinheiten.
Durch die Equilibrierung ergibt sich die gewünschte Konzentration an Resten R¹ in dem Organopolysiloxan (1) und damit deren Viskosität.

Es kann eine Art von Organopolysiloxan (1) oder ein Gemisch aus mindestens zwei Arten von Organopolysiloxanen (1) eingesetzt werden.

Vorzugsweise weisen die in den erfindungsgemäßen Entschäumerformulierungen eingesetzten Füllstoffe (2) eine BET-Oberfläche von 20 bis 1000 m²/g auf. Vorzugsweise weisen die Füllstoffe (2) eine Partikelgröße von weniger als 10 µm und eine Agglomeratgröße von weniger als 100 µm auf.

Beispiele für Füllstoffe (2) sind Siliciumdioxid (Kieselsäuren), Titandioxid, Aluminiumoxid, Metallseifen, Quarzmehl, PTFE-Pulver, Fettsäureamide z. B.
Ethylenbisstearamid, fein verteilte hydrophobe Polyurethane.

Vorzugsweise werden als Füllstoffe (2) Siliciumdioxid (Kieselsäuren), Titandioxid oder Aluminiumoxid mit einer BET-Oberfläche von 20 bis 1000 m²/g eingesetzt. Vorzugsweise weisen diese Füllstoffe eine Partikelgröße von weniger als 10 µm und eine Agglomeratgröße von weniger als 100 µm auf.

Bevorzugt als Füllstoffe (2) sind Kieselsäuren, insbesondere solche mit einer BET-Oberfläche von 50 bis 800 m²/g. Diese Kieselsäuren können pyrogene oder gefällte Kieselsäuren sein. Es sind als Füllstoffe (2) sowohl vorbehandelte Kieselsäuren einsetzbar, also hydrophobe Kieselsäuren, als auch hydrophile Kieselsäuren. Beispiele für handelsübliche hydrophobe Kieselsäuren, die erfindungsgemäß eingesetzt werden können, sind HDK® H2000, eine pyrogene mit Hexamethyldisilazanen behandelte Kieselsäure mit einer BET-Oberfläche von 140 m²/g (käuflich erhältlich bei der Wacker-Chemie GmbH, Deutschland) und eine gefällte mit Polydimethylsiloxan behandelte Kieselsäure mit einer BET-Oberfläche von 90 m²/g (käuflich erhältlich unter der Bezeichnung "Sipernat D10" bei der Degussa AG, Deutschland).

Hydrophile Kieselsäuren können auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (1) oder (4) oder in einer Mischung aus den Komponenten (1), (3) und gegebenenfalls (4) und gegebenenfalls (5) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden.

Bei der in den erfindungsgemäßen Entschäumerformulierungen eingesetzten Komponente (3) handelt es sich vorzugsweise um Siliconharze aus Einheiten der Formel (IV), bei denen in weniger als 30%, bevorzugt in weniger als 5%, der Einheiten im Harz die Summe e+f gleich 2 ist.

Bevorzugt handelt es sich bei den Organopolysiloxanharzen aus Einheiten der Formel (IV) um MQ-Harze aus Einheiten der Formeln

SiO₂ (Q-Einheiten)

und

R²₃SiO_{1/2} (M-Einheiten),

wobei R² die oben dafür angegebene Bedeutung hat.

Das molare Verhältnis von M- zu Q-Einheiten liegt dabei vorzugsweise im Bereich von 0,5 bis 2,0, bevorzugt im Bereich von 0,6 bis 1,0. Neben den M- und Q-Einheiten können die MQ-Harze gegebenenfalls noch geringe Mengen an R²SiO_{3/2} (T)-Einheiten oder R²₂SiO_{2/2} (D)-Einheiten, in Mengen von vorzugsweise 0,01 bis 20 Mol%, bevorzugt 0,01 bis 5 Mol %, bezogen auf die Summe aller Siloxaneinheiten, enthalten. Diese Organopolysiloxanharze können außerdem bis zu 10 Gew.-% freie Si-gebundene Hydroxy- oder Alkoxygruppen, wie Methoxy- oder Ethoxygruppen, enthalten.

Vorzugsweise haben diese Organopolysiloxanharze (3) bei 25°C und 101,425 kPa eine Viskosität größer 1000 mPa·s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Beispiele für in den erfindungsgemäßen Entschäumerformulierungen gegebenenfalls eingesetzten Polyorganosiloxanen (4) sind Polydimethylsiloxane der Formel (Va) mit einer Viskosität von 10 bis 1.000.000 mPa·s bzw. cyclische Polydimethylsiloxane der Formel (Vb) mit einer Viskosität von 2 bis 15 mPa·s, jeweils bei 25°C und 101,425 kPa.

Obwohl in Formel (V) nicht angegeben, können diese Polyorganosiloxane (4) 0 bis 1 Mol %, vorzugsweise 0 bis 0,02 Mol %, bezogen auf die Summe aller Siloxaneinheiten, andere Siloxaneinheiten, wie RSiO_{3/2} (T)-Einheiten oder SiO₂ (Q)-Einheiten (wobei R die oben dafür angegebene Bedeutung hat) enthalten.

Bei den erfindungsgemäßen Entschäumerformulierungen können wasserunlösliche organische Verbindungen (5) eingesetzt werden. Unter dem Begriff "wasserunlöslich" soll im Sinne der vorliegenden Erfindung eine Löslichkeit in Wasser bei 25°C und einem Druck von 101,425 kPa von maximal 3 Gewichtsprozenten verstanden werden.

Bei der gegebenenfalls eingesetzten Komponente (5) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z.B. Pentandiol-1,3-diisobutyrat, Fettsäureestern, wie z.B. Octylstearat, Dodecylpalmitat oder iso-Propylmyristat, Fettalkoholen, Ethern niedermolekularer Alkohole, Phthalaten, Estern der Phosphorsäure und Wachsen.

Bei den erfindungsgemäßen Entschäumerformulierungen können polyethermodifizierte Polysiloxane (6), die linear oder verzweigt sein können und mindestens eine Polyethergruppe tragen, eingesetzt werden. Derartige polyethermodifizierte Polysiloxane sind bekannt und z. B. in EP 1076073 A1, insbesondere Seite 2, Zeile 35 bis Seite 4, Zeile 46, beschrieben (incorporated by reference).

Beispiele für alkalische Katalysatoren (7) sind Alkali- und Erdalkalihydroxide, wie NaOH, KOH, CsOH, LiOH und Ca(OH)₂. Beispiele für saure Katalysatoren (7) sind Salzsäure, Schwefelsäure und Phosphornitridchloride.
Bei den Umsetzungsprodukten von (7) mit den Komponenten (1) bis (6) handelt es sich beispielsweise um das Produkt aus der als Füllstoff (2) bevorzugten Kieseläure mit Alkalihydroxiden, wie z.B. Kaliumsilicat oder Natriumsilicat.
Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Bei den in den erfindungsgemäßen Entschäumerformulierungen eingesetzten Komponenten (2) bis (7) kann es sich jeweils um eine Art einer solchen Komponente wie auch um ein Gemisch aus mindestens zwei Arten einer jeweiligen Komponente handeln.

Die erfindungsgemäßen Entschäumerformulierungen haben eine Viskosität von vorzugsweise 100 bis 2 000 000 mPa·s, besonders bevorzugt von 10000 bis 80 000 mPa·s, jeweils bei 25°C und 101,425 kPa.

Bevorzugt sind dabei Formulierungen, bei denen der bei der Oszillierenden Viskositätsmessung (entsprechend DIN 53019-1 und zitierten Normen) bei einer Amplitude von 1% und einer Kreisfrequenz von 100 Hz gemessener Verlustfaktor (Quotient aus Verlustmodul und Speichermodul) kleiner als 10, insbesondere kleiner als 5, ist.

Das Herstellen der erfindungsgemäßen Zusammensetzungen kann nach bekannten Verfahren, wie durch Mischen aller Komponenten erfolgen, wie z. B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen enthalten ist, zu verhindern. Im Anschluss kann bei Bedarf die in situ Hydrophobierung der Füllstoffe erfolgen. Es ist auch möglich erst die Komponenten (1) vorzulegen und ggf. zu erhitzen und dann sukzessive die Komponenten (2), (3), ggf. (4) und ggf. (5) und ggf. (6) und ggf. (7) zuzugeben.
In einer bevorzugten Ausführungsform wird Komponente (3) in gelöster Form als Lösung in Komponente (4) oder Teilen der Komponente (4) oder als Lösung in Komponente (5) oder Teilen der Komponente (5) zugegeben.

Gegenstand der Erfindung sind weiterhin Emulsionen enthaltend erfindungsgemäße Entschäumerformulierungen,
Emulgatoren und
Wasser
Falls es sich bei den erfindungsgemäßen Entschäumerformulierungen um Emulsionen handelt, können alle Emulgatoren eingesetzt werden, die dem Fachmann zur Herstellung von Siliconemulsionen bekannt sind, wie z. B. anionische, kationische oder nichtionogene Emulgatoren. Bevorzugt werden Emulgatormischungen eingesetzt, wobei mindestens ein nichtionogener Emulgator, wie z. B. Sorbitanfettsäureester, ethoxylierter Sorbitanfettsäureester, ethoxylierte Fettsäure, ethoxylierter linearer oder verzweigter Alkohol mit 10 bis 20 Kohlenstoffatomen und/oder Glycerinester, enthalten sein sollte. Weiterhin können als Verdicker bekannte Verbindungen, wie Polyacrylsäure, Polyacrylate, Celluloseether wie Carboxymethylcellulose und Hydroxyethylcellulose, Polyurethane, natürliche Verdicker, wie z. B. Xanthan Gum, sowie Konservierungsmittel und andere übliche und dem Fachmann bekannte Zusätze zugesetzt werden.

Die kontinuierliche Phase der erfindungsgemäßen Emulsionen ist bevorzugt Wasser. Es können jedoch auch erfindungsgemäße Entschäumerformulierungen in Form von Emulsionen hergestellt werden, bei denen die kontinuierliche Phase durch die Komponenten (1), (2) und (3) und ggf. (4) und ggf. (6) und ggf. (7) gebildet werden oder durch Komponente (5) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl in Wasser Emulsionen bevorzugt enthaltend
5 bis 50 Gew.-% erfindungsgemäße Entschäumerformulierungen enthaltend Komponenten (1) bis (3) und ggf. (4) und ggf. (5) und ggf. (6) und ggf. (7),
1 bis 20 Gew.-% Emulgatoren und ggf. Verdicker und 30 bis 94 Gew.-% Wasser.

Die erfindungsgemäßen Zusammensetzungen können auch als frei fließende Pulver formuliert werden. Diese sind z. B. bei der Anwendung in pulverförmigen Waschmitteln bevorzugt. Die Herstellung dieser Pulver ausgehend von den erfindungsgemäßen Entschäumerfomrulierungen enthaltend Komponenten (1) bis (3) und ggf. (4) und ggf. (5) und ggf. (6) und ggf. (7) erfolgt nach dem Fachmann bekannten Verfahren, wie Sprühtrocknung oder Aufbaugranulation und mit dem Fachmann bekannten Zusätzen.

Gegenstand der Erfindung sind weiterhin Pulver enthaltend erfindungsgemäße Entschäumerformulierungen und Trägermaterialien.

Die erfindungsgemäßen Pulver enthalten bevorzugt 2 bis 20 Gewichts-% der erfindungsgemäßen Entschäumerformulierungen enthaltend die Komponenten (1) bis (3) und ggf. (4) und ggf. (5) und ggf. (6) und ggf. (7). Als Träger kommen z. B. Zeolithe, Natriumsulfat, Natriumbicarbonat, Natriumcarbonat, Cellulosederivate, Harnstoff (-Derivate) und Zucker zum Einsatz. Die erfindungsgemäßen Pulver enthalten 80 bis 98 Gew.-% Trägermaterialien. Weitere Bestandteile der erfindungsgemäßen Pulver können z. B. Wachse sein oder organische Polymere, wie sie z. B. in EP-A 887097 und EP-A 1060778 beschrieben sind.

Ein weiterer Gegenstand der vorliegenden Erfindung sind Wasch- und Reinigungsmittel, enthaltend die erfindungsgemäßen Entschäumerformulierungen oder die erfindungsgemäßen Entschäumerformulierungen in Form von Emulsionen oder in Form von Pulvern.

Die erfindungsgemäßen Entschäumerformulierungen können überall eingesetzt werden, wo Entschäumerformulierungen auf der Basis von Organosiliciumverbindungen auch bisher eingesetzt wurden.

Ein weiterer Gegenstand der vorliegenden Erfindung ist ein Verfahren zum Entschäumen und/oder zur Verhinderung des Schäumens von Medien, indem die erfindungsgemäßen Entschäumerformulierungen oder deren Emulsionen oder Pulver mit den Medien vermischt werden.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.
Alle in den Beispielen angeführten Viskositätsangaben sollen sich auf eine Temperatur von 25°C und einem Druck von 101,425 kPa beziehen. Diese werden gemäß DIN EN ISO 3219: 1994 (Polymere/Harze in flüssigem, emulgiertem oder dispergiertem Zustand) und DIN 53019 (Messung von Viskositäten und Fließkurven mit Rotationsviskosimetern) an einem Rotationsrheometer mit Luftlagerung von Anton Paar MCR301 mit Platte-/Kegelsystemen bestimmt.
Die Bestimmung des Verlustfaktors erfolgt nach ISO 6721-10 bei einer Amplitude von 1% und einer Kreisfrequenz von 100 Hz.

### Beispiele 1a-1e:

### Herstellung der in den erfindungsgemäßen Entschäumer- formulierungen verwendeten Organopolysiloxane (1) :

i) Kondensat **A1** aus Struktureinheiten (I) und (II) 270 g Vinyldimethylchlorsilan werden mit 96 g eines 1:1-Additionsprodukts aus Hydrogenmethyldichlorsilan und Vinylmethyldichlorsilan homogen gemischt. Diese Mischung wird durch Zutropfen von 750 ml 5%-iger HCl-Lösung unter Eiskühlung cohydrolysiert. Nach Phasentrennung wäscht man das erhaltene Oligomer je 2 Mal mit Wasser und 2%-iger Bicarbonatlösung. Das praktisch neutrale Öl wird bei 3 mbar und 130°C von flüchtigen Bestandteilen befreit. Man erhält neben 144 g Divinyltetramethyldisiloxan als oligomeren Rückstand 107 g eines Cohydrolysats **A1** der Chlorsilane mit einer Viskosität von 14,2 mm²/s (25 °C).
ii) Kondensat **A2** aus Struktureinheiten (I) und (II) 130,2 g Trimethylchlorsilan werden mit 63 g eines 1:1-Additionsprodukts aus Hydrogenmethyldichlorsilan und Vinylmethyldichlorsilan homogen gemischt. Diese Mischung wird durch sukzessives Zutropfen von 44 ml 5%-iger HCl-Lösung sowie 440 ml Wasser unter Eiskühlung cohydrolysiert. Nach einer Stunde Reaktionszeit bei Raumtemperatur erfolgt die Phasentrennung. Das erhaltene Oligomer wäscht man je 2 Mal mit Wasser und 2%-iger Bicarbonatlösung. Das praktisch neutrale Öl wird bei 3 mbar und 130°C von flüchtigen Bestandteilen befreit. Man erhält neben 57 g Hexamethyldisiloxan als oligomeren Rückstand 52 g eines Cohydrolysats **A2** der Chlorsilane.
iii) Equilibrierung des Kondensats **A1** bzw. **A2** mit linearem Polydimethylsiloxan:
Lineares Trimethylsilyl-terminiertes Polydimethylsiloxan, mit der in Tabelle 1 angegebenen Menge und Viskosität, wird mit Kondensat **A1** bzw. **A2,** mit der in Tabelle 1 angegebenen Menge, vorgelegt, homogen gemischt und auf 120°C erhitzt. Nach Zugabe von 200 ppm Phosphornitrilchlorid (gelöst in der 1,5-fachen Menge Ethylacetat) wird bei 120°C bis zur Viskositätskonstanz equilibriert. Nach Erreichen konstanter Viskosität wird der Ansatz mit 1% MgO desaktiviert, filtriert und im Vakuum bei 120°C von flüchtigen Bestandteilen befreit. Es werden erfindungsgemäße Organopolysiloxane **(1a)** bis (**1e**) mit der in der Tabelle 1 angegebenen Viskosität erhalten.

**Tabelle 1:**

| Herstellung der Organopolysiloxane (1) durch Equilibrierung des Kondensats **A1** bzw. **A2** mit linearem Polydimethylsiloxan | | | | | |
|---|---|---|---|---|---|
| Organopolysiloxan (1) | Polydimethylsiloxan | | Kondensat | | Viskosität [mPa·s] |
| | Menge [g] | Viskosität [mPa·s] | Art | Menge [g] | |
| **1a** | 900 | 30000 | **A1** | 35 | 3000 |
| **1b** | 250 | 20000 | **A1** | 10 | 1150 |
| **1c** | 300 | 34000 | **A1** | 12 | 2000 |
| **1d** | 1000 | 29000 | **A2** | 36 | 1500 |
| **1e** | 1000 | 29000 | **A1** | 36 | 2000 |

### Vergleichspolymer (V1f):

### Herstellung eines über die Struktureinheit O_{2/2}RSi-Y-SiR₂O_{1/2} verbrückten Organopolysiloxans (V1f) gemäß EP 434 060 B2 (nicht erfindungsgemäß, Vergleichsversuch V2):

99,20 % eines linearen Vinyldimethylsilyl-terminierten Polydimethylsiloxans der Viskosität 500 mPa s werden mit 0,75 % eines Si-H-funktionalisierten Polysiloxans der Formel (H₃C)₃Si-O-[Si(CH₃)H-O]_{y}-[Si(CH₃)₂-O]_{z}-Si(CH₃)₃ (mit y=5 und z=3) vorgelegt, mit 0,05 % eines Platin-Katalysators versetzt und für 60 min bei 80°C erhitzt. Man erhält ein über O_{2/2}RSi-Y-SiR₂O_{1/2}-Einheiten verbrücktes Organopolysiloxan (**V1f)** mit einer Viskosität von 6000 mPa·s. Beispiele

### Beispiele 2a-2g und Vergleichsversuche V1 und V2:

### Herstellung der erfindungsgemäßen Entschäumerformulierungen 2a-2g mit den erfindungsgemäßen Organopolysiloxanen (1) und Herstellung der nicht erfindungsgemäßen Entschäumerformulierungen V1 und V2:

Zur Herstellung der Entschäumerformulierungen wurden die in der Tabelle 2 beschriebenen Stoffe mit einem Dissolver vermischt und in Gegenwart von 1500 ppm KOH (als 20%ige Lösung in Methanol) 4 Stunden auf 150°C erhitzt und nach Abkühlen nochmals mit dem Dissolver homogenisiert.

**Tabelle 2: Zusammensetzung der Entschäumerformulierungen**

| Beisp. bzw. Vergl. | Komponente | Komponente | Komponente | Komponente | Komponenten | Viskosität | Verlustfaktor |
|---|---|---|---|---|---|---|---|
| | **(1)** | **(2)** | **(3)** | **(4)** | **(5)/(6)** | | |
| | Teile | Teile | Teile | Teile | Teile | [Pa s] | |
| **2a** | 88 | 6 | 2,5 | - | 2,5 | 8,93 | 1,85 |
| | **1a** | **C1** | **D1** | | **E1** | | |
| **2b** | 29 | 6 | 2,5 | 59 | 2,5 | 16,3 | 4.18 |
| | **1b** | **C1** | **D1** | **B1** | **E1** | | |
| **2c** | 88 | 6 | 2,5 | - | 2,5 | n.b. | n.b. |
| | **1b** | **C1** | **D1** | | **E1** | | |
| **2d** | 88 | 6 | 2,5 | - | 2,5 | 9,53 | 1.97 |
| | **1c** | **C1** | **D1** | | **E1** | | |
| **2e** | 88 | 6 | 2,5 | - | 2,5 | 7,7 | 2,08 |
| | **1d** | **C1** | **D1** | | **E1** | | |
| **2f** | 88 | 6 | 2,5 | - | 2,5 | 8,57 | 1,92 |
| | **1e** | **C1** | **D1** | | **E1** | | |
| **2g** | 85 | 5 | 5 | - | 2,5 | 10,2 | 1,48. |
| | **1e** | **C1** | **D1** | | **E1** | | |
| | | | | | 2,5 | | |
| | | | | | E2 | | |
| **v1 ¹⁾** | - | 5 **C1** | 2,5 **D1** | 89 **B1** | 2,5 **E1** | 26,5 | n.b. |
| **v2** ²⁾ | 82 | 5 | 2,5 | 7 | 2,5 | 26,3 | n.b. |
| | **V1f** nicht erfindungsgemäß | **C1** | **D1** | **B2** | **E1** | | |

| | | | | | | | |
|---|---|---|---|---|---|---|---|
| ¹⁾Vergleichsversuch V1 gemäß EP 301 531 A2 ²⁾Vergleichsversuch V2 gemäß EP 434 060 B2 | | | | | | | |

### Verwendete Stoffe:

B1: Ein mit Trimethylsiloxangruppen terminiertes Polydimethylsiloxan mit einer Viskosität von 0,008 m²/s
B2: Ein mit Trimethylsiloxangruppen terminiertes Polydimethylsiloxan mit einer Viskosität von 0,0001 m²/s
C1: Eine hydrophile pyrogene Kieselsäure mit einer BET-Oberfläche von 300 m²/g (erhältlich bei der Wacker Chemie AG, Deutschland unter der Bezeichnung HDK® T30)
D1: Ein bei Raumtemperatur festes Siliconharz bestehend aus (nach ²⁹Si-NMR und IR-Analyse) 40 mol-% CH₃SiO_{1/2}-, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol (bezogen auf Polystyrolstandard)
E1: Ein Kohlenwasserstoffgemisch mit einem Siedebereich von 235-270°C.
E2: Ein Polyether-modifiziertes Silicon-Copolymer der Struktur

   (H₃C)₃Si-[Si(CH₃)₂O]ᵤ-[GSi(CH₃)O)ᵥ-Si(CH₃)₃

   mit G = (CH₂)₃-(O-CH₂CH₂)_{w}-(O-CH(CH₃)-CH₂)ₓ-OH,

   wobei u, v, w und x so gewählt werden, dass das Polymer eine Viskosität von 1100 mPa·s und einen Trübungspunkt (nach DIN EN 1890) von 25°C aufweist.

### Prüfung der erfindungsgemäßen Entschäumerformulierungen 2a-2g bzw. der nicht erfindungsgemäßen Vergleichsformulierungen V1 und V2 auf ihre Entschäumerwirksamkeit:

Die so erhaltenen erfindungsgemäßen und nicht erfindungsgemäßen Entschäumerformulierungen wurden nun hinsichtlich des Tests in der Schwarzlauge überprüft. Die Ergebnisse dieser Tests sind in den Tabellen 3 - 5 zusammengefasst.

Zur besseren Prüfung wurde eine Mischung aus 40 Teilen der in Tabelle 2 genannten Entschäumerformulierungen und 60 Teilen eines Gemisches aus aliphatischen Kohlenwasserstoffen mit einer Viskosität von 3 mm²/s und einem Flammpunkt > 100°C mit einem Labordissolver bei 1.000 min⁻¹ hergestellt.

### Prüfung in Schwarzlauge:

400 ml Schwarzablauge aus dem Zellstoffprozess werde in einer auf 80°C thermostatisierten 1000 ml Umpumpapparatur mit einer Umpumpgeschwindigkeit von 1,5 1/min umgepumpt.
Sobald das Schaumniveau eine Höhe von 75 mm erreicht hat, wird der Entschäumer zudosiert, Schaumzerfallszeit und das niedrigste Schaumniveau, das nach Zugabe von Entschäumer und einsetzendem Schaumzerfall erreicht wird, werden festgehalten. Je kleiner die Schaumzerfallszeit t1 und je niedriger das Schaumniveau h1 sind, desto besser ist die Schnellwirkung eines Entschäumers.
Danach wird die Langzeitwirkung des Entschäumers bestimmt, welche die Zeitspanne t2 darstellt, die benötigt wird, um vom niedrigsten Schaumniveau zum ursprünglichen Schaumniveau (75 mm) zu kommen.

**Tabelle 3:**

| Ergebnisse der Prüfung der Entschäumerwirksamkeit an Schwarzablauge aus dem Zellstoffprozess (Hardwood der Fa. UPM Kymmene Oy aus Kuusankoski, Finnland) Dosierung: 4 ul der oben hergestellten Mischung aus Entschäumerformulierung und Kohlenwasserstoffgemisch | | | |
|---|---|---|---|
| Beisp. bzw. Vergl. | Schaumzerfallszeit t1 in [s] | Schaumniveau nach Schaumzerfall [mm] | Langzeitwirkung t2 in [s] |
| **V1**¹⁾ | 40 | 18 | 430 |
| **2b** | 32 | 17 | 475 |
| **2c** | 36 | 17 | 530 |

| | | | |
|---|---|---|---|
| ¹⁾Vergleichsversuch V1 gemäß EP 301 531 A2 | | | |

Die erfindungsgemäßen Beispiele haben in dieser Prüfung auf die Entschäumung von Hardwood-Schwarzablauge gegenüber der Vergleichsformulierung V1 eine kürzere Schaumzerfallszeit bei gleicher Schaumhöhe wie auch eine bessere Langzeitwirkung als die nach dem Stand der Technik hergestellten Formulierungen.

Diese sehr gute Entschäumerwirkung tritt sowohl im Beispiel 2b auf, bei dem das erfindungsgemäße Organopolysiloxan 1c nur einen verhältnismäßig geringen Teil der Entschäumerformulierung ausmacht, wie auch im Beispiel 2c, bei dem das erfindungsgemäße Organopolysiloxan 1c den größten Teil der Entschäumerformulierung ausmacht.

**Tabelle 4:**

| Ergebnisse der Prüfung der Entschäumerwirksamkeit an Schwarzablauge aus dem Zellstoffprozess (Softwood der Fa. UPM Kymmene Oy aus Kuusankoski, Finnland) Dosierung: 3 µl der oben hergestellten Mischung aus Entschäumerformulierung und Kohlenwasserstoffgemisch | | | |
|---|---|---|---|
| Beisp. bzw. Vergl. | Schaumzerfallszeit t1 in [s] | Schaumniveau nach Schaumzerfall [mm] | Langzeitwirkung t2 in [s] |
| **V2** ²⁾ | 38 | 9 | 700 |
| **2a** | 30 | 6 | 1700 |
| **2d** | 26 | 6 | 1300 |

| | | | |
|---|---|---|---|
| ²⁾ Vergleichsversuch V2 gemäß EP 434 060 B2 | | | |

Die erfindungsgemäßen Beispiele zeigen sich auch in der Entschäumung von Schwarzablauge aus Softwood als äußerst effizient. Dies tritt in den erfindungsgemäßen Beispielen 2a und 2d zutage, die sich der Vergleichsformulierung V2 sowohl in der Schaumzerfallszeit bei gleicher Schaumhöhe wie auch in der Langzeitwirkung überlegen zeigen.

**Tabelle 5:**

| Ergebnisse der Prüfung der Entschäumerwirksamkeit in einer weiteren Schwarzablauge aus dem Zellstoffprozess (Softwood der Fa. UPM Kymmene Oy aus Kuusankoski, Finnland) Dosierung: 3 µl der oben hergestellten Mischung aus Entschäumerformulierung und Kohlenwasserstoff-Gemisch | | | |
|---|---|---|---|
| Beisp. bzw. Vergl. | Schaumzerfallszeit t1 in [s] | Schaumniveau nach Schaumzerfall [mm] | Langzeitwirkung t2 in [s] |
| **V2**²⁾ | 15 | 22 | 178 |
| **2e** | 16 | 19 | 323 |
| **2f** | 20 | 18 | 380 |
| **2g** | 11 | 16 | 1470 |

| | | | |
|---|---|---|---|
| ²⁾ Vergleichsversuch V2 gemäß EP 434 060 B2 | | | |

Auch in dieser Schwarzablauge aus Softwood zeigt sich die äußerst effiziente Entschäumung. Die erfindungsgemäßen Beispiele 2e-2g zeigen sich vor allem in der Langzeitwirkung der Vergleichsformulierung V2 deutlich überlegen.

## Patentansprüche

1. Entschäumerformulierungen enthaltend
(1) Organopolysiloxane enthaltend pro Molekül mindestens eine Struktureinheit der allgemeinen Formel
O_{2/2}RSi-Y-SiRO_{2/2} (I)
und mindestens 2 Einheiten der allgemeinen Formel
R¹R_{b}SiO(_{3-b})_{/2} (II)
und Einheiten der allgemeinen Formel
R_{c}SiO_{(4-c)}/2 (III),
wobei
b 0, 1 oder 2, vorzugsweise 1 oder 2, bevorzugt 2 ist,
c 1 oder 2, vorzugsweise 2, ist,
R gleich oder verschieden sein kann und einen einwertigen SiC-gebundenen organischen Rest mit 1 bis 30 C-Atomen, vorzugsweise einen einwertigen Kohlenwasserstoffrest mit 1 bis 18 C-Atomen, der frei von aliphatischen Kohlenstoff-Kohlenstoff-Mehrfachbindungen ist und der ein oder mehrere voneinander getrennte O-Atome enthalten kann, bedeutet,
R¹ gleich R oder ein Alkenylrest mit 2 bis 4 C-Atomen,
Y einen zweiwertigen organischen Rest mit 1 bis 30 C-Atomen, bevorzugt einen zweiwertigen Kohlenwasserstoffrest mit 1 bis 12 C-Atomen, bedeutet,
(2) Füllstoffe,
(3) Organopolysiloxanharze aus Einheiten der Formel
R²ₑ(R³O)_{f}SiO(_{4-e-f)/2} (IV),
worin
R² gleich oder verschieden sein kann und ein Wasserstoffatom oder einen einwertigen, gegebenenfalls substituierten, SiC-gebundenen Kohlenwasserstoffrest mit 1 bis 30 C-Atomen, vorzugsweise einen einwertigen Kohlenwasserstoffrest mit 1 bis 18 C-Atomen, bedeutet,
R³ gleich oder verschieden sein kann und ein Wasserstoffatom oder einen einwertigen, gegebenenfalls substituierten Kohlenwasserstoffrest mit 1 bis 4 C-Atomen bedeutet,
e 0, 1, 2 oder 3 ist und
f 0, 1, 2 oder 3 ist,
mit der Maßgabe, dass die Summe e+f kleiner oder gleich 3 ist und in weniger als 50 % aller Einheiten der Formel (IV) im Organopolysiloxanharz die Summe e+f gleich 2 ist, gegebenenfalls
(4) Polyorganosiloxane der allgemeinen Formel
R⁴R₂SiO(SiR₂O)ₘSiR₂R⁴ (Va)
oder 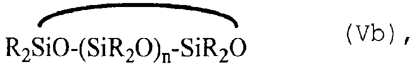 wobei
R gleich oder verschieden sein kann und die oben dafür angegebene Bedeutung hat,
R⁴ gleich oder verschieden sein kann und R oder OR⁵ sein kann, wobei
R⁵ ein Wasserstoffatom oder einen einwertigen, gegebenenfalls substituierten Kohlenwasserstoffrest mit 1 bis 25 C-Atomen bedeutet,
m eine ganze Zahl ist, und vorzugsweise m so gewählt ist, dass die Polyorganosiloxane der Formel (Va) bei 25°C und 101,425 kPa eine Viskosität von 10 bis 1 000 000 mPa·s haben,
n eine ganze Zahl ist, und vorzugsweise n so gewählt ist, dass die Polyorganosiloxane der Formel (Vb) bei 25°C und 101,425 kPa eine Viskosität von 2 bis 15 mPa·s haben,
mit der Maßgabe, dass die Polyorganosiloxane auch geringe Anteile an Verzweigungen, vorzugsweise T-Einheiten (R⁴SiO_{3/2}) und Q-Einheiten (SiO₂), enthalten können,
gegebenenfalls
(5) eine wasserunlösliche organische Verbindung gegebenenfalls
(6) polyethermodifizierte Polysiloxane, welche linear oder verzweigt sein können und mindestens eine Polyethergruppe enthalten,
und gegebenenfalls
(7) ein alkalischer oder saurer Katalysator oder dessen Umsetzungsprodukt mit den Komponenten (1) bis (6).

2. Entschäumerformulierungen nach Anspruch 1 enthaltend
(1) 100 Gew.-Teile Organopolysiloxane (1)
(2) mindestens 0,1 Gew.-Teile und höchstens 100 Gew.-Teile Füllstoffe,
(3) mindestens 0,1 Gew.-Teile und höchstens 50 Gew.-Teile Organopolysiloxanharze aus Einheiten der Formel (IV)
(4) mindestens 0 Gew.-Teile, bevorzugt mindestens 1 Gew.-Teil, und höchstens 900 Gew.-Teile, bevorzugt höchstens 500 Gew.-Teile, Polyorganosiloxane der allgemeinen Formel (Va) oder (Vb),
(5) mindestens 0 Gew.-Teile, bevorzugt mindestens 1 Gew.-Teil, und höchstens 900 Gew.-Teile, bevorzugt höchstens 500 Gew.-Teile, wasserunlösliche organische Verbindung,
(6) mindestens 0 Gew.-Teile, bevorzugt mindestens 1 Gew.-Teil, und höchstens 200 Gew.-Teile, bevorzugt höchstens 100 Gew.-Teile, polyethermodifizierte Polysiloxane, welche linear oder verzweigt sein können und mindestens eine Polyethergruppe tragen, und
(7) mindestens 0 Gew.-Teile und höchstens 5 Gew.-Teile eines alkalischen oder sauren Katalysators oder dessen Umsetzungsprodukts mit den Komponenten (1) bis (6).

3. Entschäumerformulierungen nach Anspruch 1 oder 2, **dadurch gekennzeichnet, dass** Y ein Rest der Formel -CH₂CH₂- ist.

4. Entschäumerformulierungen nach Anspruch 1, 2 oder 3, **dadurch gekennzeichnet, dass** R¹ ein Methyl- oder Vinylrest ist.

5. Entschäumerformulierungen nach einem der Ansprüche 1 bis 4, **dadurch gekennzeichnet, dass** als Füllstoffe (2) Kieselsäuren eingesetzt werden.

6. Entschäumerformulierungen nach einem der Ansprüche 1 bis 5, **dadurch gekennzeichnet, dass** als Organopolysiloxanharze (3) MQ-Harze aus Einheiten der Formeln
SiO₂ (Q-Einheiten) und
R²₃SiO_{1/2} (M-Einheiten),
eingesetzt werden,
wobei R² die oben dafür angegebene Bedeutung hat,
das molare Verhältnis von M- zu Q-Einheiten dabei im Bereich von 0,5 bis 2,0 liegt, die MQ-Harze neben den Mund Q-Einheiten noch geringe Mengen an R²SiO_{3/2} (T)-Einheiten oder R²₂SiO_{2/2} (D)-Einheiten, in Mengen von vorzugsweise 0,01 bis 20 Mol%, bezogen auf die Summe aller Siloxaneinheiten, enthalten können und die MQ-Harze bis zu 10 Gew.-% freie Si-gebundene Hydroxy- oder Alkoxygruppen enthalten können.

7. Entschäumerformulierungen nach einem der Ansprüche 1 bis 6, **dadurch gekennzeichnet, dass** als Polyorganosiloxane (4) der Formel (Va) Dimethylpolysiloxane eingesetzt werden.

8. Entschäumerformulierungen nach einem der Ansprüche 1 bis 6, **dadurch gekennzeichnet, dass** als Polyorganosiloxane (4) Dimethylpolysiloxane der allgemeinen Formel (Va) mit R⁴ gleich einem Rest OR⁵, wobei R⁵ ein C₁-C₂₅-Alkylrest ist, eingesetzt werden.

9. Entschäumerformulierungen nach einem der Ansprüche 1 bis 8, **dadurch gekennzeichnet, dass** als wasserunlösliche organische Verbindungen (5) solche mit einem Siedepunkt größer als 100°C bei 900 bis 1100 hPa, insbesondere solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z.B. Pentandiol-1,3-diisobutyrat, Fettsäureestern, wie z.B. Octylstearat, Dodecylpalmitat oder iso-Propylmyristat, Fettalkoholen, Ethern niedermolekularer Alkohole, Phthalaten, Estern der Phosphorsäure und Wachsen, eingesetzt werden.

10. Emulsionen von Entschäumerformulierungen enthaltend Entschäumerformulierungen nach einem der Ansprüche 1 bis 9 Emulgatoren und
Wasser.

11. Pulver enthaltend
Entschäumerformulierungen nach einem der Ansprüche 1 bis 9 und Trägermaterialien.

12. Wasch- oder Reinigungsmittel enthaltend
Entschäumerformulierungen nach einem der Ansprüche 1 bis 9 oder deren Emulsionen nach Anspruch 10 oder deren Pulver nach Anspruch 11.

13. Verfahren zum Entschäumen und/oder zur Verhinderung des
Schäumens von Medien, indem die Entschäumerformulierungen nach einem der Ansprüche 1 bis 9 oder deren Emulsionen nach Anspruch 10 oder deren Pulver nach Anspruch 11 mit den Medien vermischt werden.

14. Verfahren nach Anspruch 13, **dadurch gekennzeichnet, dass** bei der Zellstoffherstellung anfallende wässrige Medien eingesetzt werden.

## Claims

1. Defoamer formulations comprising
(1) organopolysiloxanes comprising per molecule at least one structural unit of the general formula
O_{2/2}RSi-Y-SiRO_{2/2} (I)
and at least 2 units of the general formula
R¹R_{b}SiO_{(3-b)/2} (II)
and units of the general formula
R_{c}SiO_{(4-c)/2} (III),
where
b is 0, 1, or 2, preferably 1 or 2, more preferably 2,
c is 1 or 2, preferably 2,
R may be identical or different and is a monovalent, SiC-bonded organic radical having 1 to 30 C atoms, preferably a monovalent hydrocarbon radical having 1 to 18 C atoms which is free from aliphatic multiple carbon-carbon bonds and which may comprise one or more O atoms separate from one another,
R¹ is the same as R or is an alkenyl radical having 2 to 4 C atoms,
Y is a divalent organic radical having 1 to 30 C atoms, preferably a divalent hydrocarbon radical having 1 to 12 C atoms,
(2) fillers,
(3) organopolysiloxane resins composed of units of the formula
R²ₑ(R³O)_{f}SiO_{(4-e-f)/2} (IV),
in which
R² may be identical or different and is a hydrogen atom or a monovalent, optionally substituted, SiC-bonded hydrocarbon radical having 1 to 30 C atoms, preferably a monovalent hydrocarbon radical having 1 to 18 C atoms,
R³ may be identical or different and is a hydrogen atom or a monovalent, optionally substituted hydrocarbon radical having 1 to 4 C atoms,
e is 0, 1, 2, or 3 and
f is 0, 1, 2, or 3,
with the proviso that the sum e+f is less than or equal to 3 and in less than 50% of all units of the formula (IV) in the organopolysiloxane resin, the sum e+f is 2,
optionally
(4) polyorganosiloxanes of the general formula
R⁴R₂SiO(SiR₂O)mSiR₂R⁴ (Va)
or 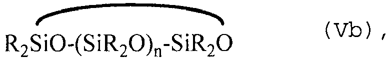 where
R may be identical or different and has the definition specified for it above,
R⁴ may be identical or different and may be R or OR⁵, where
R⁵ is a hydrogen atom or a monovalent, optionally substituted hydrocarbon radical having 1 to 25 C atoms,
m is an integer, and preferably m is selected such that the polyorganosiloxanes of the formula (Va) have a viscosity at 25°C and 101 425 kPa of 10 to 1 000 000 mPa·s,
n is an integer, and preferably n is selected such that the polyorganosiloxanes of the formula (Vb) have a viscosity at 25°C and 101 425 kPa of 2 to 15 mPa·s,
with the proviso that the polyorganosiloxanes may also include small fractions of branching instances, preferably T units (R⁴SiO_{3/2}) and Q units (SiO₂),
optionally
(5) a water-insoluble organic compound,
optionally
(6) polyether-modified polysiloxanes, which may be linear or branched and which comprise at least one polyether group,
and optionally
(7) an alkaline or acidic catalyst or reaction product thereof with components (1) to (6).

2. Defoamer formulations according to Claim 1, comprising
(1) 100 parts by weight of organopolysiloxanes (1),
(2) at least 0.1 part by weight and not more than 100 parts by weight of fillers,
(3) at least 0.1 part by weight and not more than 50 parts by weight of organopolysiloxanes composed of units of the formula (IV),
(4) at least 0 part by weight, preferably at least 1 part by weight, and not more than 900 parts by weight, preferably not more than 500 parts by weight, of polyorganosiloxanes of the general formula (Va) or (Vb),
(5) at least 0 part by weight, preferably at least 1 part by weight, and not more than 900 parts by weight, preferably not more than 500 parts by weight, of water-insoluble organic compound,
(6) at least 0 part by weight, preferably at least 1 part by weight, and not more than 200 parts by weight, preferably not more than 100 parts by weight, of polyether-modified polysiloxanes which may be linear or branched and which carry at least one polyether group, and
(7) at least 0 part by weight and not more than 5 parts by weight of an alkaline or acidic catalyst or reaction product thereof with components (1) to (6).

3. Defoamer formulations according to Claim 1 or 2, **characterized in that** Y is a radical of the formula -CH₂CH₂-.

4. Defoamer formulations according to Claim 1, 2, or 3, **characterized in that** R¹ is a methyl or vinyl radical.

5. Defoamer formulations according to any of Claims 1 to 4, **characterized in that** fillers (2) used comprise silicas.

6. Defoamer formulations according to any of Claims 1 to 5, **characterized in that** organopolysiloxane resins (3) used comprise MQ resins composed of units of the formulae
SiO₂ (Q units)
and
R²₃SiO_{1/2} (M units),
where R² has the definition specified for it above, the molar ratio of M to Q units is in the range from 0.5 to 2.0, the MQ resins, further to the M and Q units, may also include small amounts of R²SiO_{3/2} (T) units or R²₂SiO_{2/2} (D) units, in amounts of preferably 0.01 to 20 mol%, based on the sum of all siloxane units, and the MQ resins may include up to 10 wt% of free, Si-bonded hydroxyl or alkoxy groups.

7. Defoamer formulations according to any of Claims 1 to 6, **characterized in that** polyorganosiloxanes (4) used of the formula (Va) comprise dimethylpolysiloxanes.

8. Defoamer formulations according to any of Claims 1 to 6, **characterized in that** polyorganosiloxanes (4) used comprise dimethylpolysiloxanes of the general formula (Va) with R⁴ being a radical OR⁵, where R⁵ is a C₁-C₂₅ alkyl radical.

9. Defoamer formulations according to any of Claims 1 to 8, **characterized in that** water-insoluble organic compounds (5) used comprise those having a boiling point of greater than 100°C at 900 to 1100 hPa, more particularly those selected from mineral oils, natural oils, isoparaffins, polyisobutylenes, residues from the oxo-process alcohol synthesis, esters of low molecular mass synthetic carboxylic acids, such as pentane-1,3-diol diisobutyrate, fatty acid esters, such as octyl stearate, dodecyl palmitate, or isopropyl myristate, fatty alcohols, ethers of low molecular mass alcohols, phthalates, esters of phosphoric acid, and waxes.

10. Emulsions of defoamer formulations, comprising defoamer formulations according to any of Claims 1 to 9,
emulsifiers, and
water.

11. Powder comprising
defoamer formulations according to any of Claims 1 to 9 and carrier materials.

12. Detergent or cleaning composition comprising
defoamer formulations according to any of Claims 1 to 9 or the emulsions thereof according to Claim 10 or the powder thereof according to Claim 11.

13. Method for defoaming and/or for preventing the foaming of media, by mixing the defoamer formulations according to any of Claims 1 to 9 or the emulsions thereof according to Claim 10 or the powder thereof according to Claim 11 with the media.

14. Method according to Claim 13, **characterized in that** aqueous media arising in chemical-pulp production are used.

## Revendications

1. Formulations anti-mousse contenant
(1) des organopolysiloxanes contenant par molécule au moins une unité structurale de formule générale
O_{2/2}RSi-Y-SiRO_{2/2} (I)
et au moins 2 unités de formule générale
R¹R_{b}SiO_{(3-b)/2} (II)
et des unités de formule générale
R_{c}SiO_{(4-c)/2} (III),
dans lesquelles
b signifie 0, 1 ou 2, de préférence 1 ou 2, de préférence 2,
c signifie 1 ou 2, de préférence 2,
les R peuvent être identiques ou différents, et signifient un radical organique monovalent relié à SiC contenant 1 à 30 atomes C, de préférence un radical hydrocarboné monovalent contenant 1 à 18 atomes C, qui est exempt de liaisons carbone-carbone multiples aliphatiques et qui peut contenir un ou plusieurs atomes O séparés les uns des autres,
R¹ signifie R ou un radical alcényle contenant 2 à 4 atomes C,
Y signifie un radical organique bivalent contenant 1 à 30 atomes C, de préférence un radical hydrocarboné bivalent contenant 1 à 12 atomes C,
(2) des charges,
(3) des résines d'organopolysiloxanes constituées d'unités de formule
R²ₑ(R³O)_{f}SiO_{(4-e-f)/2} (IV)
dans laquelle
les R² peuvent être identiques ou différents, et signifient un atome d'hydrogène ou un radical hydrocarboné monovalent, éventuellement substitué, relié à SiC, contenant 1 à 30 atomes C, de préférence un radical hydrocarboné monovalent contenant 1 à 18 atomes C,
les R³ peuvent être identiques ou différents, et signifient un atome d'hydrogène ou un radical hydrocarboné monovalent, éventuellement substitué, contenant 1 à 4 atomes C,
e signifie 0, 1, 2 ou 3, et
f signifie 0, 1, 2 ou 3,
à condition que la somme e+f soit inférieure ou égale à 3 et que la somme e+f soit égale à 2 dans moins de 50 % de toutes les unités de formule (IV) dans la résine d'organopolysiloxane, éventuellement
(4) des polyorganosiloxanes de formule générale
R⁴R₂SiO(SiR₂O)ₘSiR₂R⁴ (Va)
ou 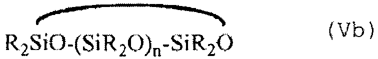 dans lesquelles
les R peuvent être identiques ou différents, et ont la signification indiquée précédemment,
les R⁴ peuvent être identiques ou différents, et peuvent signifier R ou OR⁵,
R⁵ signifiant un atome d'hydrogène ou un radical hydrocarboné monovalent, éventuellement substitué, de 1 à 25 atomes C,
m signifie un nombre entier, et m est de préférence choisi de sorte que les polyorganosiloxanes de formule (Va) présentent à 25 °C et à 101,425 kPa une viscosité de 10 à 1 000 000 mPa·s,
n signifie un nombre entier, et n est de préférence choisi de sorte que les polyorganosiloxanes de formule (Vb) présentent à 25 °C et à 101,425 kPa une viscosité de 2 à 15 mPa·s,
à condition que les polyorganosiloxanes puissent également contenir de faibles proportions de ramifications, de préférence d'unités T (R⁴SiO_{3/2}) et d'unités Q (SiO₂), éventuellement
(5) un composé organique insoluble dans l'eau, éventuellement
(6) des polysiloxanes modifiés par des polyéthers, qui peuvent être linéaires ou ramifiés, et contiennent au moins un groupe polyéther, et éventuellement
(7) un catalyseur alcalin ou acide ou son produit de réaction avec les composants (1) à (6).

2. Formulations anti-mousse selon la revendication 1, contenant
(1) 100 parties en poids d'organopolysiloxanes (1),
(2) au moins 0,1 partie en poids et au plus 100 parties en poids de charges,
(3) au moins 0,1 partie en poids et au plus 50 parties en poids de résines d'organopolysiloxane constituées d'unités de formule (IV),
(4) au moins 0 partie en poids, de préférence au moins 1 partie en poids, et au plus 900 parties en poids, de préférence au plus 500 parties en poids, de polyorganosiloxanes de formule générale (Va) ou (Vb),
(5) au moins 0 partie en poids, de préférence au moins 1 partie en poids, et au plus 900 parties en poids, de préférence au plus 500 parties en poids, de composé organique insoluble dans l'eau,
(6) au moins 0 partie en poids, de préférence au moins 1 partie en poids, et au plus 200 parties en poids, de préférence au plus 100 parties en poids, de polysiloxanes modifiés par des polyéthers, qui peuvent être linéaires ou ramifiés, et portent au moins un groupe polyéther, et
(7) au moins 0 partie en poids et au plus 5 parties en poids d'un catalyseur alcalin ou acide ou son produit de réaction avec les composants (1) à (6).

3. Formulations anti-mousse selon la revendication 1 ou 2, **caractérisées en ce que** Y est un radical de formule -CH₂CH₂-.

4. Formulations anti-mousse selon la revendication 1, 2 ou 3, **caractérisées en ce que** R¹ est un radical méthyle ou vinyle.

5. Formulations anti-mousse selon l'une quelconque des revendications 1 à 4, **caractérisées en ce que** des silices sont utilisées en tant que charges (2).

6. Formulations anti-mousse selon l'une quelconque des revendications 1 à 5, **caractérisées en ce que** des résines MQ constituées d'unités de formule
SiO₂ (unités Q)
et
R²₃SiO_{1/2} (unités M),
sont utilisées en tant que résines d'organopolysiloxane (3),
R² ayant a signification indiquée précédemment,
le rapport molaire entre les unités M et Q étant dans la plage allant de 0,5 à 2,0, les résines MQ pouvant contenir en plus des unités M et Q également de petites quantités d'unités R²SiO_{3/2} (T) ou d'unités R²₂SiO_{2/2} (D), en quantités de préférence de 0,01 à 20 % en moles, par rapport à la somme de toutes les unités siloxane, et
les résines MQ pouvant contenir jusqu'à 10 % en poids de groupes hydroxy ou alcoxy reliés à Si libres.

7. Formulations anti-mousse selon l'une quelconque des revendications 1 à 6, **caractérisées en ce que** des diméthylpolysiloxanes sont utilisés en tant que polyorganosiloxanes (4) de formule (Va).

8. Formulations anti-mousse selon l'une quelconque des revendications 1 à 6, **caractérisées en ce que** des diméthylpolysiloxanes de formule générale (Va) avec R⁴ = un radical OR⁵, R⁵ étant un radical alkyle en C₁-C₂₅, sont utilisés en tant que polyorganosiloxanes (4).

9. Formulations anti-mousse selon l'une quelconque des revendications 1 à 8, **caractérisées en ce que** des composés organiques insolubles dans l'eau (5) qui ont un point d'ébullition supérieur à 100 °C à 900 à 1 100 hPa, notamment choisis parmi les huiles minérales, les huiles naturelles, les isoparaffines, les polyisobutylènes, les résidus de la synthèse d'oxoalcools, les esters d'acides carboxyliques synthétiques de faible poids moléculaire, tels que p. ex. le diisobutyrate de pentanediol-1,3, les esters d'acides gras, tels que p. ex. le stéarate d'octyle, le palmitate de dodécyle ou le myristate d'isopropyle, les alcools gras, les éthers d'alcools de faible poids moléculaire, les phtalates, les esters de l'acide phosphorique et les cires, sont utilisés.

10. Émulsion de formulations anti-mousse, contenant des formulations anti-mousse selon l'une quelconque des revendications 1 à 9, des émulsifiants et de l'eau.

11. Poudre, contenant des formulations anti-mousse selon l'une quelconque des revendications 1 à 9 et des matériaux supports.

12. Détergents contenant des formulations anti-mousse selon l'une quelconque des revendications 1 à 9 ou leurs émulsions selon la revendication 10 ou leurs poudres selon la revendication 11.

13. Procédé de démoussage et/ou d'inhibition du moussage dans des milieux, selon lequel les formulations anti-mousse selon l'une quelconque des revendications 1 à 9 ou leurs émulsions selon la revendication 10 ou leurs poudres selon la revendication 11 sont mélangées avec les milieux.

14. Procédé selon la revendication 13, **caractérisé en ce que** des milieux aqueux formés lors de la fabrication de cellulose sont utilisés.
